# FASCICULE DE BREVET EUROPEEN

(11) **EP 0 498 714 B1**
(45) Date de publication et mention de la délivrance du brevet: **30.11.1994**
(21) Numéro de dépôt: 92400280.1
(22) Date de dépôt: 04.02.1992
(51) Int. Cl.: F16D 66/00

(54) **Dispositif de freinage contrôlé d'un train de roues**
Einrichtung zum Bremsen eines Achssatzes
Device for braking an axle set

(30) Priorité: 06.02.1991 FR 9101317
(43) Date de publication de la demande: 12.08.1992
(73) Titulaire: MESSIER BUGATTI, F-78140 Velizy Villacoublay (FR)
(72) Inventeur: Guichard, Jean, F-92250 La Garenne Colombes (FR)
(74) Mandataire: Fruchard, Guy

(56) Documents cités:
- EP-A- 0 346 066
- FR-A- 2 246 775
- GB-A- 2 171 525

## Description

La présente invention concerne un dispositif de freinage contrôlé d'un train de roues, en particulier un train de roues d'avion.

On sait que lors du roulage au sol d'un avion en dehors du décollage et de l'atterrissage, il est quelquefois souhaitable pour le confort des passagers ou pour diminuer l'usure des freins en carbone de n'actionner qu'une partie des freins de roues, le freinage résultant de cet actionnement partiel des freins étant plus progressif que lors d'un actionnement de l'ensemble des freins. Dans ce cas, afin d'éviter un échauffement excessif de certains freins par rapport aux autres, il a été envisagé d'actionner différents groupes de freins de façon alternée.

Toutefois, les différents freinages successifs de l'avion ne sont pas toujours effectués avec la même intensité de sorte que certains des groupes de freins peuvent atteindre des températures notablement différentes des autres groupes de freins diminuant ainsi l'efficacité globale du freinage dans le cas où un freinage d'urgence implique un actionnement de l'ensemble des freins de roues. Par ailleurs, on connait du document FR-A-2.246.775 un dispositif détecteur de la température de divers ensembles de freinage et de la différence de température entre deux ensembles. L'exploitation de ces informations est toutefois limitée a un affichage et au déclenchement d'une alarme lorsque la différence de température dépasse un seuil.

Un but de la présente invention est de proposer un dispositif de freinage assurant un freinage contrôlé réparti sur les différents freins de roues.

En vue de la réalisation de ce but, on propose selon l'invention un dispositif de freinage contrôlée d'un train de roues comportant des moyens pour agir de façon alternée sur des groupes de freins de roues disposés de façon symétrique, des moyens pour effectuer une mesure de température immédiate ou anticipée de chaque groupe de freins de roues, et des moyens pour sélectionner un groupe de freins de roues à commander en fonction de la mesure de température effectuée.

Ainsi, l'alternance de freinage sur les différents groupes de freins de roues ne se fait pas de façon systématique ou totalement au hasard mais de façon parfaitement contrôlée pour maintenir l'ensemble des freins de roues à une température aussi homogène que possible.

Selon un mode de réalisation avantageux de l'invention, le dispositif de freinage comporte des moyens pour effectuer une mesure d'une différence de température entre les groupes de freins de roues, et des moyens pour commander le groupe de freins de roues le plus froid lorsque la différence atteint un seuil de différence de température et commander les groupes de freins de roues de façon cyclique lorsque le seuil de différence de température n'est pas atteint.

Selon un mode de réalisation dans lequel le dispositif comporte des moyens pour effectuer une mesure immédiate de température, ces moyens comprennent des détecteurs de température disposés sur au moins un frein de roues de chaque groupe de freins de roues. Ainsi, l'information recueillie est immédiatement exploitable.

Selon un autre mode de réalisation de l'invention dans lequel le dispositif comporte des moyens pour effectuer une mesure anticipée de température, ces moyens comprennent des moyens de détection d'un couple fourni par chaque groupe de freins de roues et des moyens de calcul de l'énergie dépensée dans chaque groupe de freins de roues en fonction du couple fourni. Ainsi, il est possible de prévoir l'élévation de température qui va résulter de la dispersion d'énergie au sein d'un groupe de frein et donc de commander l'alternance du freinage afin de limiter l'élévation de température effective au sein de chaque groupe de freins.

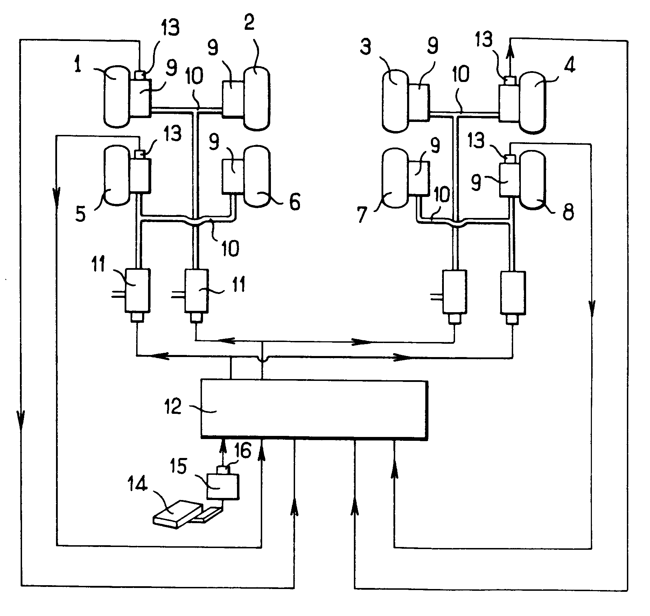

D'autres caractéristiques et avantages de l'invention apparaîtront à la lecture de la description qui suit d'un mode de réalisation particulier non limitatif de l'invention en liaison avec la figure unique ci-jointe qui représente une vue schématique d'un train de roues équipé d'un dispositif de freinage selon l'invention.

En référence à la figure, le train de roues comporte d'une façon classique une série de huit roues portant les références numériques 1 à 8, chacune équipée d'un frein de roue 9 actionné par un fluide hydraulique amené au frein de roue par une canalisation 10 reliée à une servovalve 11 commandée par une unité de gestion de freinage 12. Pour une meilleure clarté du dessin, le circuit d'alimentation de servo-valve 11 n'a pas été représenté. Les roues du train de roues et les freins de roues correspondants sont divisés en groupes de freins de roues disposés de façon symétrique. Dans le mode de réalisation illustré, les roues 1 et 2 sont reliées à une même servo-valve et les roues 3 et 4 sont également reliées à une même servo-valve, les servovalves des roues 1 à 4 étant prévues pour être actionnées simultanément tandis que les servo-valves des roues 5 à 8 sont commandées simultanément. On a ainsi deux groupes de roues auxquels sont associés deux groupes de freins de roues.

Au moins l'une des roues de chaque groupe de freins de roues est équipée d'un détecteur de température 13 relié à l'unité de gestion de freinage 12 par une ligne de transmission d'information.

Par ailleurs, le freinage est commandé par une pédale 14 actionnant un détendeur de pression 15 équipé d'un détecteur de pression de pédale 16 relié à l'unité de gestion de freinage 12.

L'unité de gestion de freinage 12 est par exemple une unité programmée pour assurer une alternance cyclique du freinage sur chacun des deux groupes de freins de roues lorsque les conditions de roulage au sol en dehors du décollage et de l'atterrissage sont détectées, c'est-à-dire lorsque la vitesse de l'avion est inférieure à un seuil donné, par exemple 20 mètres par seconde et lorsque la pression de freinage est inférieure à un seuil donné, par exemple 40 x 10⁵ Pa. Cette alternance cyclique est modifiée en fonction d'une mesure immédiate ou anticipée de la température de chaque groupe de freins. Par exemple, lorsque l'unité de gestion de freinage 12 est une unité numérisée, il est possible d'effectuer par programmation des calculs en fonction de certaines données introduites dans l'unité de gestion. Par exemple, on effectue une mesure anticipée de la température en utilisant l'information donnée par le détecteur de pression de pédale 16 en l'associant à la sélection du groupe de freins de roues qui est actionné lors de chaque freinage. En effet, cette pression est significative du couple fourni par le frein, en particulier, plus la pression du détendeur de pression 15 est élevée, plus le couple fourni par les freins de roues sera élevé, ce qui entrainera un échauffement proportionnel des freins de roues. Dans ce cas, on effectue de préférence au niveau de l'unité de gestion de freinage 12 une mesure du temps pendant lequel la pédale 14 est actionnée de sorte qu'il est alors possible de calculer avec précision l'énergie totale qui sera dépensée dans chaque frein de roues et d'en déduire par calcul l'élévation de température qui va en résulter au niveau de chaque roue de freins de roues. Lorsque la différence de température prévue entre les groupes de freins de roues atteint un seuil déterminé, on modifie alors la commande cyclique des freins de roues pour solliciter plusieurs fois de suite le groupe de freins de roues ayant la température anticipée la plus basse, le freinage cyclique est repris lorsque des conditions normales de fonctionnement sont rétablies, par exemple lorsque la différence de température anticipée entre les groupes de freins est repassée en dessous du seuil, ou lorsqu'elle est passée par une valeur nulle. La mesure anticipée de température peut être utilisée soit seule soit en association avec une mesure de température immédiate donnée par les détecteurs de température 13. Dans le cas où la mesure de température anticipée est utilisée seule, on peut bien entendu prévoir de supprimer les détecteurs de température 13.

Dans le cas où l'unité de gestion de freinage 12 n'est pas assez puissante pour effectuer des calculs de température anticipée ou dans le cas où elle n'est pas adaptée à effectuer de tels calculs, par exemple lorsque l'unité de gestion de freinage est une unité analogique, on utilise seulement la mesure de température immédiate donnée par les détecteurs de température 13, la mesure de température ainsi réalisée étant utilisée comme précédemment pour modifier l'alternance de l'actionnement des groupes de freins de roues, par exemple lorsque la différence de température des groupes de freins de roues atteint un seuil prédéterminé.

Bien entendu l'invention n'est pas limitée au mode de réalisation décrit et on peut y apporter des variantes de réalisation sans sortir du cadre de l'invention. En particulier, on peut prévoir d'effectuer une moyenne de certaines températures mesurées de façon immédiate ou anticipée au niveau de chaque frein de roues.

Au lieu de mesurer la pression à la pédale on peut mesurer directement le couple fourni par un frein de roue au moyen de jauges de contrainte disposées sur les axes de roues. On évite ainsi d'avoir à tenir compte des caractéristiques spécifiques de chaque frein pour calculer l'énergie totale dépensée.

On notera que la mesure immédiate de température des freins n'implique pas que cette mesure de température soit effectuée au niveau des disques eux-mêmes. La mesure peut au contraire être effectuée au niveau de tout organe thermiquement relié aux disques de freins, par exemple au niveau du tube de torsion qui porte les disques. Le seuil d'écart de températures au-delà duquel l'alternance de commande des groupes de freins est modifiée devra donc tenir compte du retard de transmission de l'élévation de température entre les disques où se fait la dissipation d'énergie initiale et le point où la mesure de température est effectuée.

## Revendications

1. Dispositif de freinage contrôlé d'un train de roues comportant des moyens (12) pour agir de façon alternée sur des groupes de freins de roues (1-4 ; 5-8) disposés de façon symétrique, caractérisé en ce qu'il comporte des moyens (13) pour effectuer une mesure de température immédiate de chaque groupe de freins de roues et des moyens (12) pour sélectionner un groupe de freins de roues à commander en fonction de la mesure de température effectuée.

2. Dispositif de freinage contrôlé selon la revendication 1, caractérisé en ce que les moyens pour effectuer une mesure de température immédiate comprennent des détecteurs de température (13) disposés sur au moins un frein de roues de chaque groupe de freins de roues.

3. Dispositif de freinage contrôlé selon la revendication 1 ou la revendication 2, caractérisé en ce que qu'il comporte des moyens (12) pour effectuer une mesure d'une différence de température entre les groupes de freins de roues et des moyens pour commander le groupe de freins de roues le plus froid lorsque la différence atteint un seuil de différence de température, et commander les groupes de freins de roues de façon cyclique lorsque le seuil de différence de température n'est pas atteint.

4. Dispositif de freinage contrôlé d'un train de roues comportant des moyens (12) pour agir de façon alternée sur des groupes de freins de roues (1-4 ; 5-8) disposés de façon symétrique, caractérisé en ce qu'il comporte des moyens (16) pour effectuer une mesure de température anticipée de chaque groupe de freins de roue, et des moyens (12) pour sélectionner un groupe de freins de roues à commander en fonction de la mesure de température effectuée.

5. Dispositif de freinage contrôlé selon la revendication 4, caractérisé en ce que les moyens pour effectuer une mesure de température anticipée comprennent des moyens de détection d'un couple fourni par chaque groupe de freins de roues et des moyens de calcul de l'énergie dépensée dans chaque groupe de freins de roues en fonction du couple fourni.

6. Dispositif de freinage contrôlé selon la revendication 4 ou la revendication 5, caractérisé en ce qu'il comporte des moyens (12) pour effectuer une mesure d'une différence de température entre les groupes de freins de roues et des moyens pour commander le groupe de freins de roues le plus froid lorsque la différence atteint un seuil de différence de température, et commander les groupes de freins de roues de façon cyclique lorsque le seuil de différence de température n'est pas atteint.

## Claims

1. A device for controlled braking of a wheel train, the device including means (12) for actuating symmetrically-disposed groups of wheel brakes (1-4 ; 5-8) in alternation, characterized in that the device includes means (13) for performing immediate temperature measurement of each group of wheel brakes, and means (12) for selecting a group of wheel brakes to be actuated as a function of the temperature measurement performed.

2. A device for controlled braking according to claim 1, characterized in that the means for performing immediate temperature measurement comprise temperature sensors (13) disposed on at least one wheel brake in each group of wheel brakes.

3. A device for controlled braking according to claim 1 or claim 2, characterized in that it includes means (12) for measuring a temperature difference between the groups of wheel brakes and means for actuating the coolest group of wheel brakes when the difference reaches a threshold temperature difference, and for actuating the groups of wheel brakes cyclically so long as the threshold temperature difference is not reached.

4. A device for controlled braking of a wheel train, the device including means (12) for actuating symmetrically-disposed groups of wheel brakes (1-4 ; 5-8) in alternation, characterized in that it includes means (16) for performing anticipated temperature measurement of each group of wheel brakes, and means (12) for selecting a group of wheel brakes to be actuated as a function of the temperature measurement performed.

5. A device for controlled braking according to claim 4, characterized in that the means for performing anticipated temperature measurements comprise means for detecting the torque provided by each group of wheel brakes and means for calculating the energy dissipated in each group of wheel brakes as a function of the torque provided.

6. A device for controlled braking according to claim 4, or claim 5, characterized in that it includes means (12) for measuring a temperature difference between the groups of wheel brakes and means for actuating the coolest group of wheel brakes when the difference reaches a threshold temperature difference, and for actuating the groups of wheel brakes cyclically so long as the threshold temperature difference is not reached.

## Patentansprüche

1. Vorrichtung zum gesteuerten Bremsen eines Radsatzes mit Mitteln (12) zum alternierenden Einwirken auf symmetrisch angeordnete Radbremsgruppen (1-4; 5-8), gekennzeichnet durch Mittel (13) zur Durchführung einer direkten Messung der Temperatur jeder Radbremsgruppe und Mittel (12) zum Wählen einer zu betätigenden Radbremsgruppe in Abhängigkeit von der durchgeführten Temperaturmessung.

2. Vorrichtung zum gesteuerten Bremsen nach Anspruch 1, dadurch gekennzeichnet, daß die Mittel zur Durchführung einer direkten Temperaturmessung Temperaturfühler (13) umfassen, die zumindest an einer Radbremse jeder Radbremsgruppe angeordnet sind.

3. Vorrichtung zum gesteuerten Bremsen nach Anspruch 1 oder 2, gekennzeichnet durch Mittel (12) zur Durchführung einer Messung einer Temperaturdifferenz zwischen den Radbremsgruppen und Mittel zur Betätigung der die niedrigste Temperatur aufweisenden Radbremsgruppe, wenn die Differenz eine Temperaturdifferenzschwelle erreicht, und zur zyklischen Betätigung der Radbremsgruppen, wenn die Temperaturdifferenzschwelle nicht erreicht wird.

4. Vorrichtung zum gesteuerten Bremsen eines Radsatzes mit Mitteln (12) zum alternierenden Einwirken auf symmetrisch angeordnete Radbremsgruppen (1-4; 5-8), gekennzeichnet durch Mittel (16) zur Durchführung einer Vorausmessung der Temperatur jeder Radbremsgruppe und Mittel (12) zum Wählen einer zu betätigenden Radbremsgruppe in Abhängigkeit von der durchgeführten Temperaturmessung.

5. Vorrichtung zum gesteuerten Bremsen nach Anspruch 4, dadurch gekennzeichnet, daß die Mittel zur Durchführung einer Vorausmessung der Temperatur Mittel zur Erfassung eines von jeder Radbremsgruppe erzeugten Moments und Mittel zur Berechnung der in jeder Radbremsgruppe verbrauchten Energie in Abhängigkeit von dem erzeugten Moment umfassen.

6. Vorrichtung zum gesteuerten Bremsen nach Anspruch 4 oder 5, gekennzeichnet durch Mittel (12) zur Durchführung einer Messung einer Temperaturdifferenz zwischen den Radbremsgruppen und Mittel zur Betätigung der die niedrigste Temperatur aufweisenden Radbremsgruppe, wenn die Differenz eine Temperaturdifferenzschwelle erreicht, und zur zyklischen Betätigung der Radbremsgruppen, wenn die Temperaturdifferenzschwelle nicht erreicht wird.
